# EUROPEAN PATENT APPLICATION

(11) **EP 1 819 027 A2**
(43) Date of publication of application: **15.08.2007**
(21) Application number: 07101699.2
(22) Date of filing: 04.02.2007
(51) Int. Cl.: H02J 9/00

(54) **Energy saving apparatus and method**

(30) Priority: 08.02.2006 GB 0602491; 18.12.2006 GB 0625139
(71) Applicant: Jarmooz, Nader, 23 The Nethergate Clackmannanshire Alva FK12 5DE (GB)
(72) Inventor: Jarmooz, Nader, 23 The Nethergate Clackmannanshire Alva FK12 5DE (GB)
(74) Representative: Holmes, Matthew William

(57) **Abstract**

An apparatus for controlling the supply of electrical power to a device or appliance comprises a plug (18L,18E,18N) and one or more sockets (16E,16L,16N) for connection to a mains supply (24) and to one or more appliances, respectively. A current sensor (32) measures electrical current flowing between the first and second connection means and a microcontroller (22) operates a switch (triac,30) to disconnect the or each of the sockets from the plug when the current falls below a predetermined level. The predetermined level may be a percentage of the normal operating current of the appliance.

## Description

The present invention relates generally to an energy saving apparatus and method and particularly, but not exclusively, to an apparatus and method for controlling the supply of electrical power to an electrical device or appliance. Aspects of the invention relate to an apparatus and to a method.

It is known to provide electrical devices or appliances, such as television sets, DVD players, video recorders and the like with two modes of operation: a first, normal operation mode in which the appliance operates at its normal power consumption; and a second, "standby" or "sleep" mode in which power consumption by the appliance is significantly reduced.

The purpose of the standby mode is to conserve energy while the appliance is in use but to permit normal operation to be restored rapidly when required. In practice, appliances having such dual-mode operation are often configured to be controlled by remote devices, such as hand held remote control units, and the standby mode permits restoration to the normal operating mode using the remote control.

However, even in the standby mode, the appliance remains connected to the mains power supply and therefore continues to consume power, albeit at a lower rate than in the normal operating mode. Furthermore, national power distribution networks often supply power at voltages in excess of the normal operating voltage for the appliance, occasionally by as much as 10%. This excess energy supply, coupled with the fact that devices are often left in the standby state for many hours per day, results in unnecessary power wastage and poses a significant fire risk. For example, it is estimated that more than 20% of a household's power consumption is caused by devices maintained in standby mode. This increases electricity costs for the household, as well as impacting negatively on efficiency and environmental considerations. It is also known that appliances left in standby mode are a significant contributor to household fires.

It is an aim of the present invention to address these issues and to improve upon known technology. Embodiments of the invention may provide an apparatus or a method which reduces power consumption by disconnecting a device from a mains power supply when the device enters a standby or sleep mode. Other aims and advantages of the invention will become apparent from the following description, claims and drawings.

Aspects of the invention therefore provide an apparatus and a method as claimed in the appended claims.

According to another aspect of the invention there is provided an apparatus for controlling the supply of electrical power to an appliance, the apparatus comprising microcontroller means for disconnecting the appliance from a mains power supply when the power consumption and/or current draw of the appliance falls below a predetermined level.

The apparatus may comprise first connection means for connection to a power supply, second connection means for connection to the device, sensor means for measuring electrical current flowing between the first and second connection means and switch means for disconnecting the second connection means from the first connection means, wherein the microcontroller means is arranged to control the switch means so as to disconnect the second connection means from the first connection means when the current falls below a predetermined level.

The predetermined level may be a level representative of the power consumption or current draw of the appliance when in a standby or sleep mode. Advantageously, by disconnecting the appliance from the mains when it is in a standby mode, power wastage and risk of fire a reduced or substantially eliminated.

According to a further aspect of the invention there is provided an apparatus for controlling the supply of electrical power to an appliance, the apparatus comprising first connection means for connection to a power supply, second connection means for connection to the appliance, sensor means for determining the power drawn by the appliance, switch means for disconnecting the second connection means from the first connection means and microcontroller means for controlling the switch means so as to disconnect the second connection means from the first connection means when the power drawn by the appliance falls below a predetermined level.

In an embodiment, the switch means is arranged to disconnect both the microcontroller means and the second connection means from the first connection means when the power drawn by the appliance falls below the predetermined level.

The apparatus may comprise power regulator means for providing a regulated power supply to the microcontroller means.

The apparatus may comprise power supply means for providing electrical power to the microcontroller means when the microcontroller means is disconnected from the first connection means by the switch means.

In an embodiment, the power supply means comprises a battery, power cell or the like. The power supply means may comprise a rechargeable battery, power cell or the like.

The apparatus may comprise charging means for charging the battery when the microcontroller means is connected to the first connection means by the switch means. The charging means may be arranged to monitor the charge on the battery when the microcontroller means is disconnected from the first connection means and to send a signal to the microcontroller means when the charge on the batter falls below a predetermined level. The microcontroller means may be arranged to control the switch means to connect the microcontroller means to the first connection means on receipt of the signal from the charging means.

In an embodiment, the microcontroller means is arranged to control the switch means so as to disconnect the second connection means from the first connection means when the appliance is switched from an operating mode to a standby mode.

The apparatus may comprise bypass means for bypassing the switch means so as to connect the first and second connection means directly. The bypass means may comprise a manually operable switch.

In an embodiment, the microcontroller means is connected to the switch means via an isolating device. The isolating device may comprise an optoisolator, optocoupler or the like arranged to electrically isolate or decouple the microcontroller means from the mains power supply.

In an embodiment, the switch means comprises a gated switching device such as a triac.

The first connection means may comprise plug means for connection to a socket of a mains power supply. The second connection means may comprise socket means for connection to a plug of the appliance. The apparatus may comprise a plurality of socket means for connection to a plurality of appliances.

In an embodiment, the sensor means comprises a shunt device connected between the first and second connection means. The microcontroller means may be arranged to determine the power drawn by the appliance by measuring a voltage drop across the shunt device and determining the current flowing between the first connection means and the second connection means.

An apparatus as claimed in claim wherein the sensor means includes an optoisolator device for transmitting the measured voltage drop to the microcontroller means. The optoisolator device may be arranged to isolate the microcontroller means from the mains power supply. The optoisolator device may comprise a quad channel optoisolator device for rectifying the AC signal picked up from the shunt device.

In an embodiment, the apparatus is arranged to determine a normal operating current flowing between the first and second connection means and the microcontroller means is arranged to control the switch means so as to disconnect the second connection means from the first connection means when the current flowing therebetween falls below a predetermined percentage of the normal operating current.

In an embodiment, the predetermined percentage is between approximately 85% and 95% of the normal operating current. The predetermined percentage may be between 90% and 95% of the normal operating current. The predetermined percentage may be 95% of the normal operating current.

In an embodiment, the microcontroller means is arranged to control the switch means so as to disconnect the second connection means from the first connection means when the power drawn by the appliance and/or the current flowing therebetween falls below a predetermined level for a predetermined period of time.

An apparatus as claimed in wherein the microcontroller means is arranged to determine the predetermined level by measuring the power drawn by the appliance for a predetermined period of time and/or for a predetermined number of samples and to store the predetermined level in a memory.

An apparatus as claimed in wherein the microcontroller means is arranged to repeatedly compare the power or current drawn by the appliance with the level stored in the memory.

The apparatus may comprise receiver means for receiving a signal from user, wherein the microcontroller means is operable to control the switch means to re-connect the first connection means and the second connection means on receipt of said signal.

According to yet another aspect of the invention there is provided a method of controlling the supply of electrical power to an appliance, the method comprising measuring the power drawn by the appliance, applying the value of the measured power draw to a microcontroller and disconnecting the appliance from a mains power supply when the power drawn by the appliance falls below a predetermined level.

In an embodiment, measuring the power drawn comprises measuring the electrical current flowing between a mains supply and the appliance and the method comprises disconnecting the appliance from the mains power supply when the current falls below a predetermined level.

In an embodiment, disconnecting the appliance from the mains power supply includes disconnecting the microcontroller from the mains power supply.

The method may comprise disconnecting the appliance from the mains power supply when the current and/or power drawn falls below the predetermined level for a predetermined period of time.

The method may comprise providing power to the microcontroller whilst the microcontroller is disconnected from the mains supply.

According to another aspect of the invention there is provided an electrical appliance having a plug, wherein the plug includes an apparatus as set out herein.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
Figure 1 is a perspective view of an apparatus embodying a first form of the invention;
Figure 2 is a schematic block diagram illustrating electronic circuitry suitable for controlling the apparatus of Figure 1;
Figures 3a and 3b are flow diagrams illustrating a process for operating the apparatus of Figure 1;
Figure 4 is a more detailed circuit diagram of circuitry suitable for the apparatus of Figure 1;
Figure 5 is a perspective view of an apparatus embodying a second form of the invention; and
Figure 6 is a schematic block diagram illustrating electronic circuitry suitable for controlling the apparatus of Figure 5;

In the following non-limiting description and the drawings appended hereto, like reference numerals indicate, as far as possible, like parts.

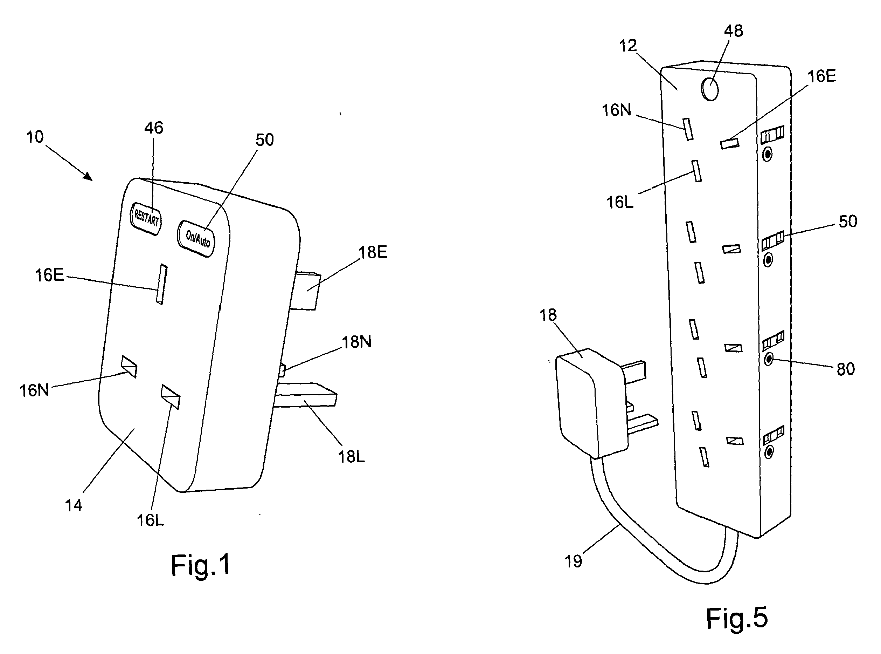

Referring firstly to Figure 1, an apparatus embodying a first form of the invention is shown generally at 10. The apparatus takes the form of a power socket adaptor for an electrical appliance and comprises a housing or enclosure 12. The housing 12 includes a front face 14 provided with slots 16L, 16N, 16E which together form a three-pin, mains socket portion for receiving the pins of a conventional mains power plug such as may be connected to an electrical appliance. A rear face of the housing 12 comprises three pins 18L, 18N, 18E which together form a three-pin, mains plug portion for connection to a standard mains power supply socket. The pins 18 of the plug portion are electrically connected to the slots 16 of the socket portion via electronic circuitry contained within the housing. Thus, the apparatus 10 is configured, in use, to be interposed between the three-pin plug of the electrical appliance and a three-pin power socket, thereby connecting the plug to the power socket via the electronic circuitry, as described below.

The front surface of the apparatus is provided with two manually operable switches, a selector switch 50 and a restart switch 46, the purpose of which is described below.

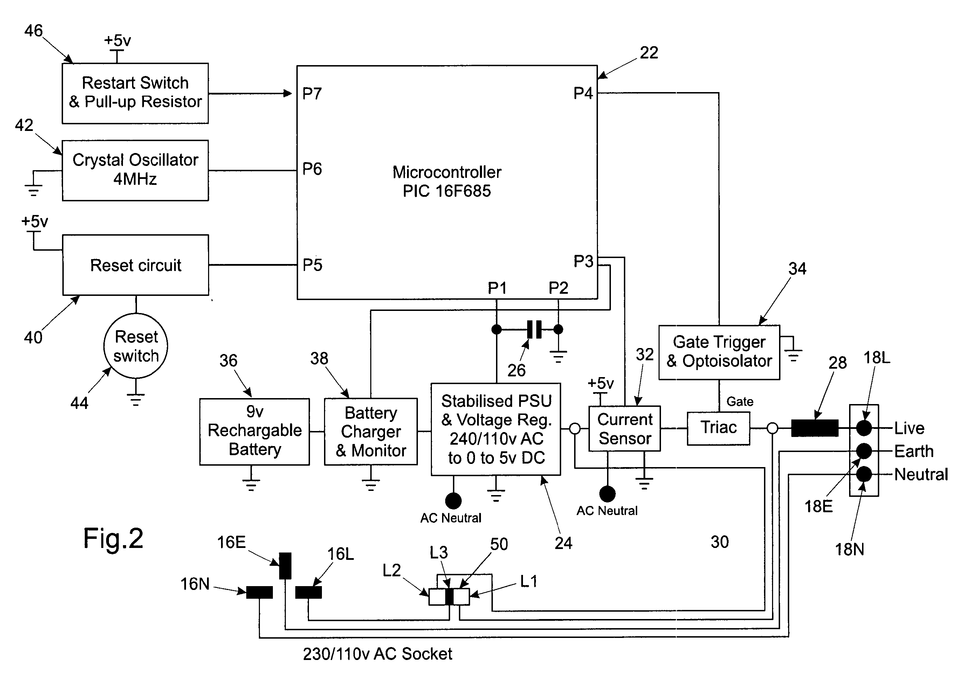

Referring next to Figure 2, the electronic circuitry referred to in the previous paragraph is shown, in block schematic form, generally at 20.

The apparatus firstly comprises control means in the form of an electronic control unit (ECU) 22. In the illustrated embodiment, the electronic control unit 22 comprises a PIC 16F685 microcontroller or microprocessor but it will be understood that other forms of processor or electronic control unit may be used in place of this variant. The microcontroller provides processing capability and is arranged to operate according to software programmed into its memory.

Power input pins P1, P2 of the microcontroller 22 are connected to a power supply unit 24 and are coupled by a capacitor 26 in a conventional manner. In the illustrated embodiment, the power supply unit 24 is switched mode power supply unit arranged to convert a 230V AC input supply into a 5V DC output for powering the microcontroller 22. The power supply unit also includes a voltage regulator for stabilising and regulating the output voltage. The power supply unit 24 is connected to the live pin 18L of the plug portion via a series combination of a current limiting element, in the form of a fuse 28, a switch, in the form of a triac 30 and a current sensing unit 32 arranged to measure the current flowing therethrough.

An output of the current sensing unit 32 is connected to a third input port pin P3 of the microcontroller 22. The third port pin P3 is a 10 bit, analogue-to-digital (A/D) conversion port, able to provide 5mA resolution, and is arranged to receive an analogue signal output by the current sensing unit, which is representative of the current flowing through the unit, and convert this into a corresponding digital value.

A fourth port pin P4 of the microcontroller 22 is configured as a digital output port and is connected to the gate electrode of the triac 30 via a decoupling device in the form of an optoisolator or optocoupler 34. In the illustrated embodiment, the optoisolator 34 comprises an MOC3041 optoisolator with triac driver output and consists of an LED optically coupled to a photo detector. The microcontroller 22 is arranged to output a control signal, in the form of a voltage of predetermined level, from the fourth pin P4 in dependence on the signal input to the third port pin P3 by the current sensing unit. The control signal from the fourth pin P4 is applied to the LED input of the optoisolator 34 which, in turn, applies a trigger signal to the gate electrode of the triac 30. On receiving the trigger signal from the optoisolator 34 at its gate electrode, the triac 30 is switched to an "on" state so that current is able to flow between the main terminals thereof. In the event that no control signal is generated from the fourth port pin P4, the trigger signal is stopped and the triac is therefore switched to an "off" state in which it no longer conducts.

The power supply unit 24 is also connected to a secondary power supply, in the form of a 9V rechargeable battery or power cell 36, via a battery charging and monitoring circuit 38 and a voltage regulator (not shown). The battery 36 is arranged to maintain a DC power supply to the power supply unit 24 for powering the microcontroller 22 when the mains power supply is disconnected from the power supply unit 24 by the triac 30, as described below. The battery charging and monitoring circuit is arranged to recharge and maintain the battery 36 using power from the power supply unit 24 but also to monitor the voltage of the battery 36 and to apply a low-charge signal to the third port pin P3 of the microcontroller 22 if the charge on the battery falls below a predetermined limit. The circuitry required to achieve this function will be well understood by those skilled in the art and further detail is not included herein.

The microcontroller is also connected to a reset circuit 40 and to an oscillator circuit 43 via fifth and sixth port pins P5, P6, respectively. The reset circuit 40 is connected to the fifth port pin P5 which represents a "master clear" port of the microcontroller 22. In the illustrated embodiment, the reset circuit 40 comprises a series combination of a current limiting resistor (not shown) and a switch 44 which, when actuated, connects the reset circuit, and hence the port pin P4, to earth. The reset circuit 40 is operable to limit forward current flow from the fifth port pin P5 and protects the microcontroller 22 against reverse bias current.

In the illustrated embodiment, the oscillator circuit 42, connected to the sixth port pin P6, takes the form of a 4MHz crystal oscillator for providing a stable clock pulse to the microcontroller 22. In other embodiments, the oscillator circuit may take the form of a resistor and capacitor (R/C) network or a crystal/ceramic resonator and capacitor combination. The configuration and operation of the oscillator will be well understood by the skilled person and is therefore not described in detail herein.

A seventh port pin P7 of the microcontroller 22 is connected to a restart unit 46 comprising a manually operable restart switch and a resistor connected to the 5V output of the power supply unit. When the restart switch is actuated, the port pin P7 is connected to the 5V supply via the resistor thereby pulling up the voltage applied thereto, the purpose of which is described below.

The live slot 16L of the socket portion is connected to the above circuitry via a single pole, double throw switch 50 (i.e. a two way switch) having first and second terminals L1, L2 which are selectively and alternately connectable to a centre or pole terminal L3 in dependence on the position of a selector knob (not shown). The first terminal L1 of the switch 50 is connected to the live pin 18L of the plug portion via the fuse 28, that is to say "upstream" of the triac 30. The second terminal L2 of the switch 50 is connected to the supply input of the power supply unit 24, that is to say "downstream" of the triac 30. The centre or pole terminal L3 of the switch 50 is connected directly to the live slot 16L of the socket portion.

Movement of the switch 50 into a first position, hereafter termed the ""Direct" position, by means of the selector knob connects the centre terminal L3 to the first terminal L1, such that the live slot 16L is connected to the live pin 18L via the switch 50 and the fuse 28 only, thereby bypassing the triac 30. On the other hand, movement of the switch 50 into a second position, hereafter termed the "Auto" position, by means of the selector knob, connects the centre terminal L3 to the second terminal L2, thereby connecting the live slot 16L to the live pin 18L via the fuse 28, the triac 30 and the current sensing unit 32.

The neutral and earth slots 16N, 16E of the socket portion are connected directly to the corresponding pins 18N, 18E of the plug portion. In addition, the neutral pin 18N

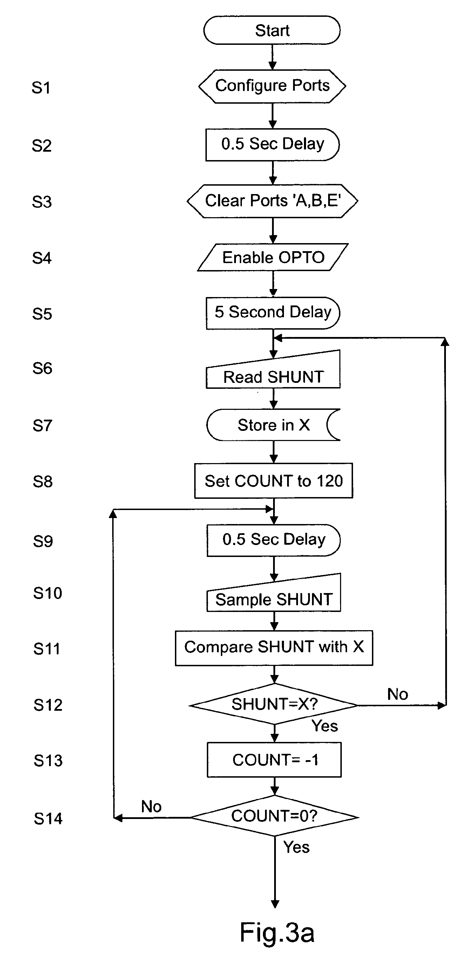

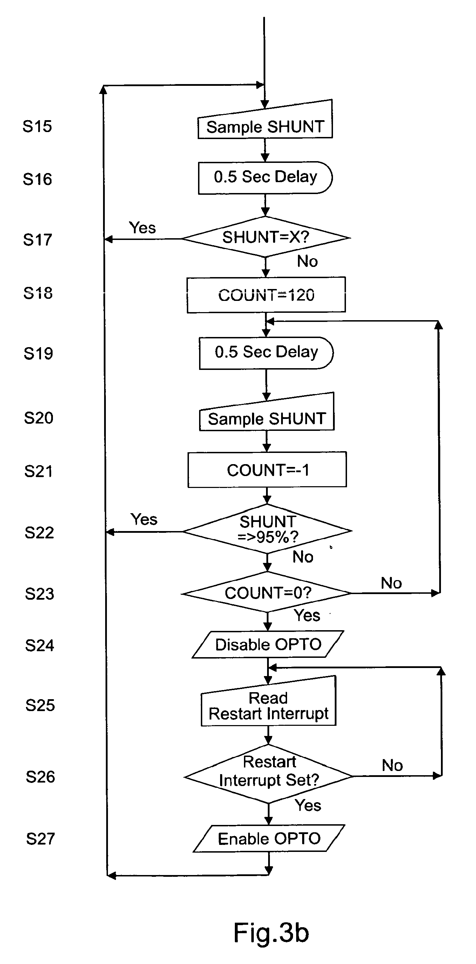

Operation of the apparatus will now be described with reference to the flow charts of Figures 3a and 3b. For the purposes of this description, it is assumed that the apparatus is initially inactive, with the selector switch 50 in the "Auto" position, and is not connected to the mains power supply such that no power is supplied to the apparatus 10.

The user firstly connects the plug of an electrical appliance, such as a television or DVD player, into the socket portion of the apparatus. The plug portion of the apparatus is then inserted into a mains power socket in a conventional manner. The mains power socket and the appliance is then switched on.

When the mains power socket is first switched on, the microcontroller 22, receiving power from the battery 36 via the power supply unit 24, begins a short initialisation process shown in steps S1 - S4 of Figure 3a, under the control of an embedded software programme. In step S1, the microcontroller 22 configures the ports P1 to P7 and then enters a 0.5 second delay to allow its internal circuits to "settle" (step S2). In step S3, the microcontroller 22 clears the ports P1 to P7 so that they are at an initial state. The microcontroller, in step S4, then generates the control signal from its output port pin P4 which is applied to the optoisolator 34. As described above, the control signal causes the optoisolator to generate the trigger signal which is applied to the triac 30, thereby switching it on.

When the triac 30 is switched on, and is thus in a conducting state, current is able to flow to the appliance from the live pin 18L via the fuse 28, the triac 30, the current sensing unit 32 and the switch 50 such that the appliance is switched on and drawing power from the mains supply. In addition, when the triac is switched on, the power supply unit 24 begins to receive power from the mains supply and power to the microcontroller 22 is thereafter provided by the power supply unit 24 rather than the battery 36. At the same time, the power supply unit 24 provides a charging current to charge the battery 36.

At step S5, the microcontroller 22 enters a 5-second delay to allow the appliance to settle down to its normal operating condition. This is advantageous where the appliance is of a type which cycles through its own initialisation process following power-up since, in such an initialisation process, normal operating power may not be drawn.

Following the 5-second delay, the microcontroller 22 enters a so-called priming routine (steps S6 - S14) in which the normal operating power of the connected appliance is determined.

In step S6, the current sensing unit 32 is "read" in order to determine the power being drawn by the appliance. In the illustrated embodiment, the current sensing unit 32 comprises a shunt device of known resistance connected in series with the load, i.e. the appliance. The instantaneous voltage drop across the shunt device is proportional to the current flowing therethrough and thus proportional to the instantaneous power being drawn by the appliance. The voltage drop across the current sensing unit is therefore applied to the A/D input port pin P3 of the microcontroller 22 to enable the microcontroller to determine the current flowing through the current sensing unit 32 and thereby the power being drawn by the appliance.

The "power" value, which in practice may be a current or a voltage value but which, in any event, is representative of the power being drawn by the appliance, is stored in the microcontroller's working (W Register) memory at step S7 and a count of 120 cycles is set in the microcontroller at step S8. After a 0.5 second delay (step S9), the microcontroller then begins to sample the output of the current sensing unit 32 once per second, under the clock pulse generated by the oscillator 42. After each sample (step S10), the power value is compared with the power value stored in the microcontroller memory (step S11).

If the measured power value is not equal to the stored power value, then the process returns to step S6 and the priming routine begins again (step S12). On the other hand, if the measured power value is the same as the stored value (step S12), then the process proceeds to step S 13 where the count is reduced by one cycle. In step S 14, it is determined whether the count is equal to zero and, if not, the process returns to step S9 for further sampling.

If, in step S 14, the count is equal to zero, the priming routine is completed and the process proceeds to step S15. It will be appreciated from the foregoing that the priming routine involves the sampling of 120 consecutive readings from the current sensing unit 32. If at any time during the priming phase the power value differs from the stored value, indicating that the power drawn by the appliance has varied, the microcontroller 22 restarts the loop so as to begin the priming routine again. Only after reading 120 equal power values is the power value stored in the microcontroller's permanent memory as the appliance's normal operating power.

After completion of the priming routine, the microcontroller 22 enters its "normal operating routine" in which the power drawn by the connected appliance is regularly and/or continuously monitored. Specifically, in step S15, the shunt is read to determine the instantaneous power value and, after a 0.5 second delay in step S16, the measured power value is compared with the power value stored in the memory (step S17).

If the measured power value is equal to the stored power value, then the process recycles back to step S 15. If the measured power value is not equal to the stored power value, then the process proceeds to step S18 where a new count is set at 120. After a further 0.5 second delay (step S19), the shunt is sampled again to determine the instantaneous power value (step S20). The microcontroller then determines whether the measured power value is greater than or equal to 95% of the stored power value and the count is reduced by 1 (steps S21, S22).

If the measured power value is greater than or equal to 95% of the stored power value, then the microcontroller determines that the connected appliance has not entered a standby or sleep mode and the process returns to step S 15. On the other hand, if the measured power value is less than 95% of the stored power value, the microcontroller checks that the count has reduced to zero at step S23 and, if not, the process recycles to step S16.

As in the priming routine, the sampling of the current sensing unit 32 in order to determine the instantaneous power value continues for 120 cycles, as long as the measured value is less than 95% of the stored power value. When the count reduces to zero, indicating that there has been 120 consecutive readings in which the measured power value is less than 95% of the stored power value, the microcontroller 22 determines that the device has entered a standby or sleep mode and, at step S24, stops generating the control signal from the port pin P4.

When the optoisolator 34 stops receiving the control signal from the microcontroller 22, the trigger signal to the triac 30 is no longer generated and thus the triac is switched off. In the off state, the triac is non-conductive and so the appliance is effectively disconnected from the mains power supply. At the same time, the power supply unit 24 is also disconnected from the mains power supply and so power to the microcontroller 22 is thereafter drawn from the battery 36.

While the triac 30 is switched off, the microcontroller 22 continues to monitor the port pin P7 for a restart signal generated by the restart switch 46 (step S25). The microcontroller 22 is arranged such that, when the voltage applied to the port pin P7 is raised to the supply voltage following actuation by the use of the restart switch (step 26), the microcontroller 22 begins again to generate the control signal which is applied to the optoisolator 34. The optoisolator 34 in turn generates the trigger signal which causes the triac 30 to switch on (step S27).

When the triac 30 switches on and becomes conductive, the power supply to the appliance is re-established and the appliance switches on. At this point, the process returns to step S15 and the apparatus continues to monitor the power drawn by the appliance.

It will be appreciated from the foregoing that when the switch 50 is set to 'Auto' mode, power from the mains electricity supply is directed through the triac 30 and the current sensing unit 32 before being applied to into socket portion. As long as the power drawn by the appliance is greater than or equal to 95% of its normal operating power, the apparatus will continue to permit the appliance to be powered. Should the appliance thereafter be placed into a standby or sleep mode, in which its power draw is reduced below 95% of the normal operating power, for more than a predetermined period of time, the appliance is automatically disconnected from the mains supply by the microcontroller switching off the triac 30.

In the "Direct" mode, current from the mains supply is conducted through the fuse 28, via the live plug pin 18L, and to the socket portion via the switch 50. The appliance is therefore powered normally without further interference. In particular, the appliance is powered irrespective of the operational status of the microcontroller 22 or the on/off status of the triac 30. Placing the appliance into standby mode has no effect and does not cause the device to be disconnected from the supply. This feature may be useful for equipment such as VCRs during timed-recording functions.

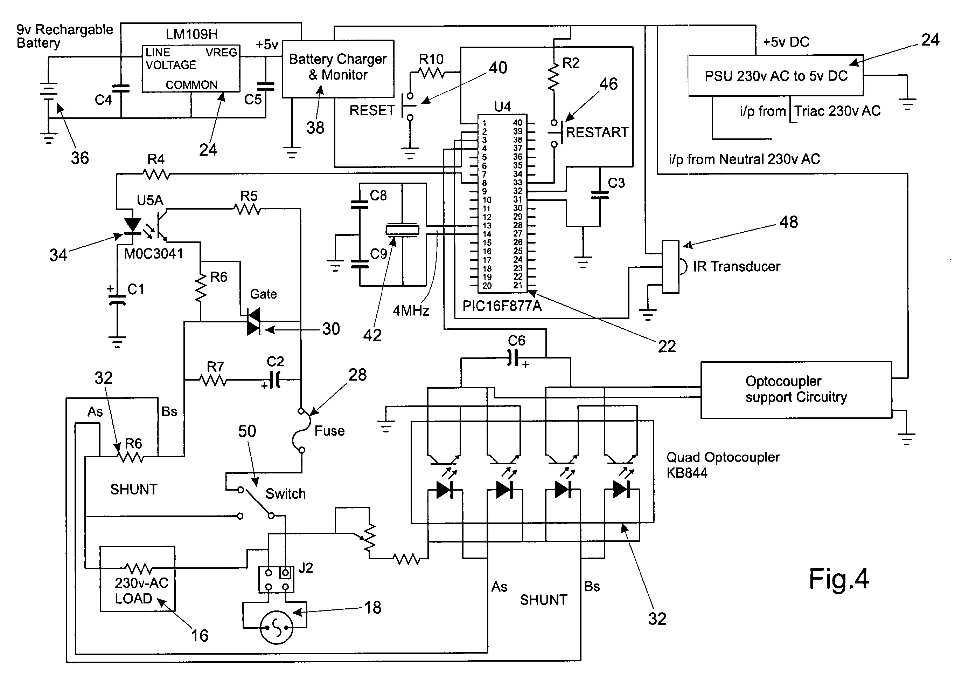

Figure 4 is a more detailed circuit diagram of one form of electronic circuit which can perform the functions described above. It will, in general, be self-explanatory to those skilled in the art and a full description is therefore not provided herein.

The following points are noted, however.

Firstly, the optoisolator 34 is an electronic component containing an LED and a phototransistor. When a voltage above a predetermined level is applied to the LED from the port pin P4 of the microcontroller 22, the phototransistor begins conducting, thereby generating a voltage which is applied, as the trigger signal, to the gate of the triac 30. The optoisolator 34 advantageously isolates the microcontroller 22 and other circuitry from the mains supply, thereby increasing safety.

Secondly, in addition to the resistive shunt device, the current sensing unit 32 comprises a quad-channel optoisolator consisting of 4 LEDs and their corresponding phototransistors connected in a double-bridge arrangement. The voltage across the shunt resistor is applied to the optoisolator which acts as a variant of the well-known "Gilbert cell" analogue multiplier to compute the four-quadrant product of the AC voltage and, therefore, the current drawn by the appliance. The optoisolator multiplier's output is a current drawn from the smoothing capacitor connected to the outputs of the optoisolator which is proportional to the true instantaneous power delivered to the load. Accuracy is maintained even if the line voltage wanders and the load is reactive and non-linear. As described above, the output of the smoothing capacitor is connected to the A/D port pin P3 of the microcontroller 22. Since the current in an AC signal remains the same across all series nodes and since the shunt device has a known fixed resistance, the voltage drop across the shunt device can be determined, from which the power consumption of the appliance can be calculated.

It will be appreciated that the use of the optoisolator in this manner also increases safety by isolating the microcontroller 22 and other internal circuitry from mains supply.

Thirdly, as described above, the battery charging unit 38 is connected to the A/D port pin P3 of the microcontroller and is arranged to send a low-charge signal to the microcontroller 22 when the battery level falls below a specified limit. When the microcontroller 22 receives the low-charge signal, it operates to switch on the triac 30 by generating and applying the control signal to the optoisolator 34. This restarts the flow of mains power into the circuitry for the purpose of recharging the battery 36.

The rechargeable battery 36 advantageously fulfils the necessary power requirement of the microcontroller 22 when all connected appliances are in standby mode and the triac 30 is switched off. In this case, the microcontroller 22 is also disconnected completely from the mains supply, thus further conserving energy and reducing the risk of fire. Although not shown in the drawings, the battery 36 is readily removable from the housing for replacement.

The above description is not intended to be limiting in any way and it will be appreciated that various modifications and/or improvements may be made to the apparatus of the invention.

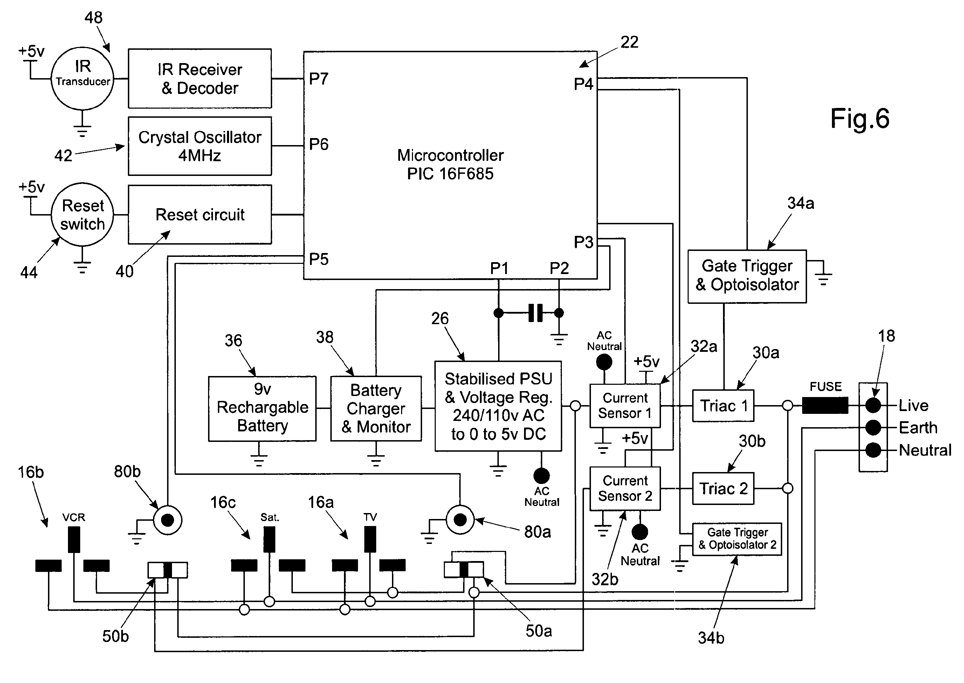

For example, it is envisaged that the apparatus may take the form of a multi-gang extension lead, providing multiple sockets for connection to a plurality of appliances. Figure 5 illustrates such an apparatus in which the housing 12 is extended and the socket portion comprises three sockets for connection to three separate appliances. In this embodiment, the apparatus of the invention has multiple outlet sockets for connecting TV, Satellite receiver box, VCR, etc, to mains electricity supply. The plug portion 18 takes the form of a standard plug which is coupled to the circuitry by means of an extended cable 19, in the manner of a conventional, multiple-outlet extension lead. Each socket 16 is provided with an individual Auto/Direct switch 50 and a primer switch 80, the purpose of which is set out below.

Figure 6 illustrates, in a manner similar to that of Figure 2, electronic circuitry for controlling the apparatus of Figure 5. In this embodiment, the three sockets are connected in parallel to the mains electricity supply via individual triacs and current sensing modules. In this embodiment only two triacs 30a, 30b, with corresponding optoisolators 34a, 34b, and two current sensing units 32a, 32b are employed. One of the sockets 16c is connected in parallel with a socket 16a and is connected through a common triac/current sensing module 30a, 32a, thereby effectively acting as a slave to socket 16a. As such, the socket 16c provides power to any appliance plugged into it only when socket 16a is supplied with power. This feature is useful for equipment such as satellite receiver boxes whose standby current requirement is the same as operating current requirement, hence making detection difficult. Normally, however, the satellite receiver box is required to operate only when the TV set is operating, thus making a master-slave relationship suitable for the purpose of reducing power consumption.

Further sockets can be incorporated in the apparatus 10 and each can, if desired, operate independently of the other sockets simply by addition of the relevant number of extra triacs, optoisolators and current sensing units connected in parallel to the various ports of the microcontroller 22.

In the embodiment of Figure 6, the restart switch is replaced by an infrared receiver unit 48 which is connected to the seventh port pin P7 and which is arranged to receive and decode an infrared signal from a remote control unit. This enables the user to restart the apparatus from its sleep mode by means of the remote control unit rather than having to actuate a switch on the apparatus itself.

In this embodiment, the user is able to set up or "prime" each socket of the apparatus 35 for use with a connected appliance by simultaneously pressing and holding a primer switch 80 corresponding to the socket and actuating the on/off button on the remote control unit of the appliance that is plugged into the socket. The microcontroller 22 then reads the value of the IR signal emitted from the remote control unit for the appliance via the IR receiver unit 48 and stores the value in its memory. Thereafter, the microcontroller 22 is able to recognise the IR signal and associate it with a specific appliance.

The reset switch is provided to reset the apparatus. Resetting the apparatus clears the memory of the microcontroller 22, therefore requiring re-priming of the apparatus for further use. This feature can be used when different appliances, which may have different power consumption levels during normal use, are required to be connected to the apparatus.

Although the illustrated embodiments describe the apparatus in terms of a device which is arranged to be interposed between the plug of the appliance and the mains power socket, it will be appreciated that the circuitry of the apparatus may be incorporated within the mains socket itself or, indeed, in the plug of the appliance.

The level of current or power at which the apparatus disconnects the appliance from the mains supply may be selected as desired. The level of 95% of the normal operating power of the appliance as the threshold value is advantageous, since the applicant has discovered that this level is appropriate for most appliances, but this may be altered if desired by appropriate programming of the microcontroller 22.

The use of the microcontroller 22 has a number of advantages. Firstly, it provides a stable platform for recognising the transition of connected appliances from a normal operating condition to a standby condition and thereby reduces erratic disconnection of the appliances. It is also has low susceptibility to fluctuations in mains electricity supply since the provision of software controlled process loops for measurement of power drawn by a connected appliance ensures that short term droops in the mains supply does not result in undesirable switching off of the appliance. In other words, the microcontroller can be programmed to determine that the connected appliance has entered a standby state only when the power drawn by the appliance falls below a predetermined level for a predetermined period of time. This ensures that disconnection of the appliance from the mains supply is due to the appliance entering standby mode rather than fluctuations in the mains supply. The microcontroller is also able to learn the normal operating power levels of a plurality of appliances and control them independently.

The internal power supply provided by the rechargeable battery advantageously permits complete disconnection of the microcontroller from the mains supply and this is supplemented by the optoisolators when ensure that, when the apparatus is in sleep mode, no mains current is drawn by the apparatus. This not only reduces power consumption of the apparatus but also reduces the risk of fire to negligible levels.

It will be apparent from the foregoing that the apparatus can act as a buffer between the mains electricity supply and any appliances connected to its outlet sockets. The apparatus continuously monitors the power drawn by each appliance and when the user switches the appliance to standby mode, the apparatus is able to detect the current drop and subsequently disconnect the appliance from the mains supply. When the user wishes to operate the appliance again, the reset switch and/or the remote control for the appliance can be actuated and the microcontroller then reconnects the appliance to the power supply, thereby permitting the appliance to function as normal.

The current sensor may be any kind of sensing device arranged to determine the power drawn by the appliance. For example, a device capable of directly sensing power drawn may be employed rather than a device used to sense current. The term microcontroller is intended to encompass substantially any electronic control unit, processor or programmable controller. The power supply unit may be a conventional transformer-type power supply unit rather than a switched mode unit. Likewise, other terms used herein are not intended to limit the invention in any way, the scope of which is set out solely by the aspects of the invention presented above and/or the claims appended hereto.

The energy wasted by 'over-supply' from the national power supply networks and also the 'standby' function of appliances can be reduced or substantially eliminated. The apparatus is able to provide a regulated 230 volts supply to the appliances connected through its outlet sockets and continuously monitors the power drawn through each of its individual outlet sockets, automatically disconnecting each appliance from the mains supply when it is switched to 'standby' mode by the user. Reconnection to mains electricity supply for any equipment can be achieved by actuating the reset switch or activating the remote-control unit for the specific appliance. The apparatus may also contain an onboard rechargeable battery that acts as its power source during sleep mode, allowing for complete disconnection of the apparatus from the mains electricity supply when all appliances are placed in 'standby' mode.

In embodiments of the invention, a drop of more than 5% in power drawn by each appliance connected through its outlet sockets for a specified period of, for example, 1 to 5 minutes, as prescribed by the software of the microcontroller, indicates that the appliance has been placed in standby mode. The microcontroller will then disconnect the appliance from the mains supply, thereby stopping the flow of power into the appliance. At the same time, the microcontroller is itself disconnected from the mains supply, placing it in a sleep mode in which it is powered by the battery. Upon receiving a signal from any specific remote control unit, the apparatus reconnects the appliance to the mains supply.

This application claims priority from UK Patent Application Nos. GB0602491.3, filed 8th February 2006, and GB0625139.1, filed 18th December 2006, the contents of which are expressly incorporated by reference herein.

## Claims

1. An apparatus for controlling the supply of electrical power to an appliance, the apparatus comprising:
first connection means for connection to a power supply;
second connection means for connection to the appliance;
sensor means for determining the power drawn by the appliance;
switch means for disconnecting the second connection means from the first connection means; and
microcontroller means for controlling the switch means so as to disconnect the second connection means from the first connection means when the power drawn by the appliance falls below a predetermined level.

2. An apparatus as claimed in claim 1 wherein the switch means is arranged to disconnect both the microcontroller means and the second connection means from the first connection means when the power drawn by the appliance falls below the predetermined level.

3. An apparatus as claimed in claim 2 comprising power supply means, such as a battery, power cell or the like, for providing electrical power to the microcontroller means when the microcontroller means is disconnected from the first connection means by the switch means.

4. An apparatus as claimed in any preceding claim comprising bypass means for bypassing the switch means so as to connect the first and second connection means directly.

5. An apparatus as claimed in any preceding claim wherein the microcontroller means is connected to the switch means via an isolating device such as an optoisolator, optocoupler or the like.

6. An apparatus as claimed in any preceding claim wherein the switch means comprises a gated switching device such as a triac.

7. An apparatus as claimed in any preceding claim wherein the sensor means comprises a shunt device connected between the first and second connection means and wherein the microcontroller means is arranged to determine the current flowing between the first connection means and the second connection means by measuring a voltage drop across the shunt device.

8. An apparatus as claimed in claim 7 wherein the sensor means includes an optoisolator device for transmitting the measured voltage drop to the control means.

9. An apparatus as claimed in any preceding claim wherein the microcontroller means is arranged to control the switch means so as to disconnect the second connection means from the first connection means when the power drawn by the appliance falls below the predetermined level for a predetermined period of time.

10. A method of controlling the supply of electrical power to an appliance, the method comprising:
measuring the power drawn by the appliance;
applying the value of the measured power draw to a microcontroller; and
disconnecting the appliance from a mains power supply when the power drawn by the appliance falls below a predetermined level.
